# EUROPÄISCHE PATENTSCHRIFT

(11) **EP 0 573 456 B1**
(45) Veröffentlichungstag und Bekanntmachung des Hinweises auf die Patenterteilung: **03.07.1996**
(21) Anmeldenummer: 92904555.7
(22) Anmeldetag: 13.02.1992
(51) Int. Cl.: H04N 1/00

(54) **DATENVERARBEITUNGS- UND DATENÜBERTRAGUNGSSYSTEM MITTELS PERSONAL COMPUTER UND FAKSIMILESENDEEMPFÄNGER**
DATA-PROCESSING AND DATA-TRANSMISSION SYSTEM USING A PERSONAL COMPUTER AND FAX TRANSCEIVER
SYSTEME DE TRAITEMENT ET DE TRANSMISSION DE DONNEES AU MOYEN D'UN ORDINATEUR PERSONNEL ET D'UN EMETTEUR-RECEPTEUR DE TELECOPIE

(30) Priorität: 28.02.1991 DE 4106454
(43) Veröffentlichungstag der Anmeldung: 15.12.1993
(73) Patentinhaber: SIEMENS AKTIENGESELLSCHAFT, D-80333 München (DE)
(72) Erfinder: HIRSCH, Lucian, D-81539 München (DE)
(86) Internationale Anmeldenummer: DE9200099
(87) Internationale Veröffentlichungsnummer: WO9216069

(56) Entgegenhaltungen:
- WO-A-90/09716
- AT&T TECHNOLOGY Bd. 4, Nr. 2, 1989, SHORT HILLS, NJ, US Seiten 12 - 17; J.S. LICWINKO ET AL.: 'AT&T FAX PRODUCTS AND SERVICES SPEED THE WRITTEN MESSAGE'
- IBM TECHNICAL DISCLOSURE BULLETIN Bd. 33, Nr. 1B, Juni 1990, ARMONK, NY, US Seite 363; 'REMOTE CONFIGURATION OF PC-DRIVEN FACSIMILE SYSTEM'
- COMPUTER TECHNOLOGY REVIEW Bd. 10, Nr. 15, Dezember 1990, LOS ANGELES, CA, US; SEITEN 52,54,56 DAVE TROWBRIDGE: 'MULTIFUNCTION PERIPHERALS WILL OVERCOME'

## Beschreibung

Die Erfindung betrifft ein Datenverarbeitungs- und Datenübertragungssystem gemäß dem Oberbegriff des Patentanspruches 1.

Aus dem Dokument AT & T Technology, Band 4, Nr. 2, 1989, Short Hills, NJ, US, Seiten 12 bis 17; J. S. Licwinko et al. mit der Bezeichnung "AT & T Fax Products And Services Speed The Written Message" ist ein PC-Fax-System bekannt, bei dem eine Fax-Karte in einem Personal Computer angeordnet wird. Aufgrund der in dem Personal Computer angeordneten Fax-Karte können mit Hilfe des Personal Computers Fax-Nachrichten gesendet bzw. empfangen werden. Diese Fax-Nachrichten können dabei an einem Bildschirm des Personal Computers dargestellt und über einen an dem Personal Computer angeschlossenen Drucker ausgegeben werden. Die PC-Fax-Karte bietet dabei für das Senden und Empfangen von Fax-Nachrichten eine interessante Alternative zu dem herkömmlichen Faksimilegerät. Bei der PC-Fax-Kartenlösung wirkt es sich jedoch nachteilig aus, daß der Personal Computer mit der integrierten Fax-Karte für die Fax-Empfangsbereitschaft stets eingeschaltet sein muß. Dies bedeutet, daß in dem Personal Computer sämtliche Funktionseinheiten ständig betriebsbereit sind, obwohl diese Betriebsbereitschaft mitunter gar nicht erwünscht ist.

Aus dem Dokument IBM Technical Disclosure Bulletin, Vol. 33, No. lB, Juni 1990, Armonk, NY, US; Seite 363 mit der Bezeichnung "Remote Configuration Of A PC-Driven Facsimile System" ist ein PC/Faksimile-System bekannt, bei dem ein Verfahren angegeben wird, wie das PC/Faksimile-System das erste Mal automatisch konfiguriert werden kann.

Aus der WO90/09716 ist ein Computersystem bekannt, das mit einer Fax-Sende-/Empfangseinrichtung gekoppelt ist, die ihrerseits wiederum über eine Anrufsteuerung (Call Rooter) mit einem fernen Faksimilegerät, Telefonapparat oder Computer verbunden ist. Die Fax-Sende-/Empfangseinrichtung ist dabei vorzugsweise als Fax-Karte in das Computersystem integriert. Alternativ ist es aber auch möglich, daß die Fax-Sende-/Empfangseinrichtung als Faksimilegerät ausgebildet ist, wobei dann jedoch sichergestellt sein muß, daß das Faksimilegerät eine empfangene Fax-Nachricht in Form eines digitalen Signals an einen Speicher des Computersystems übergibt.

Aus der DE-A1-34 31 754 ist ein Bildinformations-Verarbeitungssystem bekannt, bei dem ein Faksimilegerät und ein Personal Computer über acht parallele Datenleitungen, ein Paar einseitig gerichteter Steuersignalleitungen und drei zweiseitig gerichtete Steuersignalleitungen miteinander verbunden sind. Durch diese Verbindungen werden folgende vier Betriebsarten des Bildinformations-Verarbeitungssystems ermöglicht:
(a) Einen Aufzeichnungsmode, bei welchem die Daten von dem Computer durch einen Plotter in dem Faksimilegerät aufgezeichnet werden,
(b) einen Bildeingabemode, bei welchem die Daten von einem Abtaster in dem Faksimilegerät in dem Computer eingegeben werden,
(c) einen Übertragungs-/Transfermode, bei welchem die Daten von dem Computer an ein anderes Faksimilegerät gesendet und damit übertragen werden, und
(d) einen Empfangs-/Transfermode, bei welchem die Daten von einem anderen Faksimilegerät in den Computer eingegeben werden.

Aufgabe der Erfindung ist es, ein Datenverarbeitungs- und Datenübertragungssystem anzugeben, das einfach aufgebaut und als multifunktionales Kommunikationssystem vielseitig verwendbar ist.

Diese Aufgabe wird ausgehend von dem in dem Oberbegriff des Patentanspruches 1 definierten Datenverarbeitungs- und Datenübertragungssystem durch die in dem kennzeichnenden Teil des Patentanspruches 1 angegebenen Merkmale gelöst.

Hieraus ergibt sich der Vorteil, daß der Personalcomputer als Arbeitsplatz für eine Faksimileübertragung, PC-Übertragungsaufgaben und Vervielfältigungsarbeiten sowie ausschließlich als PC-Arbeitsplatz einsetzbar ist.

Vorteilhafte Weiterbildungen der Erfindung sind in den abhängigen Patentansprüchen angegeben.

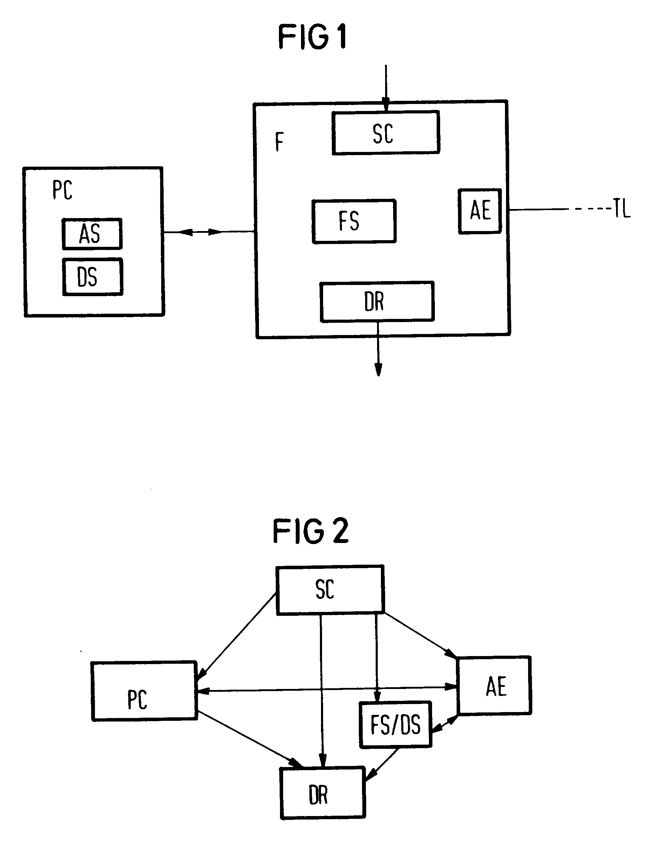

Ein Ausführungsbeispiel der Erfindung wird anhand der Figuren 1 und 2 erläutert.

Die Figur 1 zeigt angedeutet einen Faksimilesendeempfänger F mit den Baugruppen Scanner SC, Faksimilespeicher FS, Drucker DR und Anschlußeinheit AE sowie einen Personal Computer PC mit den Baugruppen Arbeitsspeicher AS und Dokumentenspeicher DS.

Die Figur 2 zeigt die einzelnen Funktionsgruppen des Systems, bestehend aus Personalcomputer PC, Scanner SC, Dokumenten- und Faksimilespeicher FS/DS, Drucker DR und Anschlußeinheit AE und ihre mögliche Zusammenarbeit.

Wesentlich an dem erfindungsgemäßen Datenverarbeitungs- und Datenübertragungssystem ist, daß alle vorgenannten Baugruppen von Faksimilegerät und Personalcomputer - im weiteren Verlauf nur noch als PC bezeichnet - als logische, funktionsmäßig vcneinander unabhängig arbeitende Baugruppen betrachtet werden. Bei allen Funktionen von dieser PC-FaksimileKopplung wird angenommen, daß die Ansteuerung (Bedienung) von dem PC aus erfolgt, indem von diesem aus jeweils ein "Initialisierungsblock" in einer definierten, für das Faksimilegerät verarbeitbaren Kommandosprache ausgegeben wird. Das Faksimilegerät antwortet bei jedem ihm zugedachten Kommando mit einer kommandospezifischen Rückantwort, die im PC zwecks eventueller Kontrolle gespeichert wird. Um diesen Vorgang jederzeit zu realisieren, läuft grundsätzlich immer bei eingeschaltetem PC ein im Arbeitsspeicher AS des PC's abgelegtes Hintergrundprogramm ab. Auf diese Weise wird die Tastatur des PC's zum Bedienplatz sowohl des PC's als auch des Faksimilegerätes.

Entsprechend der Figur 2 kann am PC grundsätzlich ein interner Vorgang abgewickelt werden. Es kann über die Anschalteinheit AE des Faksimilegerätes und über die Teilnehmerleitung TL ein ferner PC oder eine ferne Station entsprechend der Erfindung angeschaltet werden. Es kann durch den PC das Ausdrucken eines im Faksimilespeicher FS oder im Dokumentenspeicher DS des PC's abgelegtes Dokument mittels dem Drucker DR des Faksimilegerätes veranlaßt werden. Weiterhin kann durch den Anreiz des PC's ein optisch vorliegendes Dokument mittels Faksimilescanner SC gelesen und abgespeichert oder über die Anschlußeinheit weitergesendet werden.

Auch können mit dem vorliegenden System einfache oder sortierte Mehrfachkopien hergestellt werden. Das aufgezeichnete PC-Fax-System kann in dieser Weise ein vollständiges Datenverarbeitungssystem darstellen. Dabei kann der Faksimilespeicher FS auch entfallen. In diesem Speicher wird im Fax-Format (Pixelformat) abgespeichert, so daß die Kapazität relativ schnell erschöpft ist. Im Dokumentenspeicher DS des PC's wird dagegen in einem Grafikformat (Umsetzung mittels einer nicht dargestellten Umsetzeinrichtung) eingespeichert, wodurch die Speicherkapazität wesentlich vergrößerbar ist.

Weiterhin kann auch z.B. bei Ausfall des am Faksimilegerät vorhandenen Displays und bei der Fehlerüberwachung bezüglich des Faksimilegerätes der Bildschirm des PC's herangezogen werden.

## Patentansprüche

1. Datenverarbeitungs- und Datenübertragungssystem, bei dem ein Personal Computer (PC) vorgesehen ist, der zum Senden und Empfangen von Faksimile-Nachrichten über eine Schnittstelleneinrichtung mit einem Faksimilegerät (F) gekoppelt ist (PC-Fax-Kopplung), wobei das Faksimilegerät (F) Funktionsgruppen (SC, DR, FS/DS, AE) für einen wahlweisen Zugriff des Personal Computers (PC) enthält,
**dadurch gekennzeichnet,**
daß grundsätzlich beim Einschalten des Personal Computers (PC) ein die Verbindung mit dem Faksimilegerät (F) realisierendes, in einem Arbeitsspeicher (AS) des Personal Computers (PC) abgelegtes, für den wahlweisen Zugriff des Personal Computers (PC) auf die Funktionsgruppen (SC, DR, FS/DS, AE) des Faksimilegerätes (F) ausgelegtes Hintergrundprogramm läuft und daß eine Bedienungseinheit des Personal Computers (PC) so ausgestaltet ist, daß an ihr den wahlweisen Zugriff steuernde Kommandos eingebbar sind, die mittels eines PC-Interpreters in Steuerkommandos für das Faksimilegerät (F) umsetzbar sind.

2. Datenverarbeitungs- und Datenübertragungssystem nach Anspruch 1,
**dadurch gekennzeichnet,**
daß die Funktionsgruppen (SC, DR, FS/DS, AE) als Scanner, Drucker, Dokumenten- und Faksimilespeicher und/oder als Anschlußeinheit zur Anschaltung von fernen Datenverarbeitungs- und Datenübertragungssystemen ausgebildet sind.

3. Datenverarbeitungs- und Datenübertragungssystem nach Anspruch 1,
**dadurch gekennzeichnet,**
daß das in dem Arbeitsspeicher (AS) abgelegte Hinterprogramm unabhängig von anderen Programmen in dem Personal Computer (PC) abläuft.

4. Datenverarbeitungs- und Datenübertragungssystem nach einem der Ansprüche 1 bis 3,
**dadurch gekennzeichnet,**
daß jedes Steuerkommando eine Rückmeldung zum Personal Computer (PC) auslöst, wobei diese Rückmeldung kommandospezifisch als Protokoll abgespeichert wird.

5. Datenverarbeitungs- und Datenübertragungssystem nach einem der Ansprüche 1 bis 4,
**dadurch gekennzeichnet,**
daß bei der Übertragung von Nachrichten und Dokumenten eine Formatumsetzung von Faxformat auf Grafikformat und umgekehrt erfolgt.

6. Datenverarbeitungs- und Datenübertragungssystem nach einem der Ansprüche 1 bis 5,
**dadurch gekennzeichnet,**
daß ein Bildschirm des Personal Computers (PC) die Funktion (Kontrolle) eines Displays am Faksimilegerät (F) übernimmt.

## Claims

1. Data processing and data transmission system, in which a personal computer (PC) is provided which is coupled to a facsimile unit (F) (PC-fax coupling) via an interface device for the transmission and receipt of facsimile messages, the facsimile unit (F) containing functional groups (SC, DR, FS/DS, AE) for optional access of the personal computer (PC), characterized in that in principle when the personal computer (PC) is switched on a background program runs which implements the connection to the facsimile unit (F), is stored in a main memory (AS) of the personal computer (PC) and is designed for optional access of the personal computer (PC) to the functional groups (SC, DR, FS/DS, AE) of the facsimile unit (F), and in that an operator's station of the personal computer (PC) is configured such that commands which control optional access can be input at it, which commands can be converted into control commands for the facsimile unit (F) by means of a PC interpreter.

2. Data processing and data transmission system according to Claim 1, characterized in that the functional groups (SC, DR, FS/DS, AE) are designed as a scanner, a printer, document and facsimile memories and/or as a terminal unit for the connection of remote data processing and data transmission systems.

3. Data processing and data transmission system according to Claim 1, characterized in that the background program stored in the main memory (AS) runs independently of other programs in the personal computer (PC).

4. Data processing and data transmission system according to one of Claims 1 to 3, characterized in that each control command triggers an acknowledgement to the personal computer (PC), said acknowledgement being stored as a protocol in a command-specific manner.

5. Data processing and data transmission system according to one of Claims 1 to 4, characterized in that there is a change of format from fax format to graphical format and vice versa when messages and documents are transmitted.

6. Data processing and data transmission system according to one of Claims 1 to 5, characterized in that a screen of the personal computer (PC) takes on the function (checking) of a display on the facsimile unit (F).

## Revendications

1. Système de traitement de données et de transmission de données, dans lequel il est prévu un ordinateur personnel (PC), qui est couplé (couplage PC-Fax) à un appareil (F) de télécopie par l'intermédiaire d'un dispositif d'interface pour l'envoi et la réception d'informations de télécopie, l'appareil (F) de télécopie comprenant des groupes fonctionnels (SC, DR, FS/DS, AE) auxquels l'ordinateur personnel (PC) a accès au choix,
caractérisé en ce que
un programme d'arrière-plan, établissant la communication avec l'appareil (F) de télécopie, enregistré dans une mémoire (AS) de travail de l'ordinateur personnel (PC) et conçu pour que l'ordinateur personnel (PC) ait accès au choix aux groupes fonctionnels (SC, DR, FS/DS, AE) de l'appareil (F) de télécopie, se déroule principalement lors du branchement de l'ordinateur personnel (PC) et une unité de commande de l'ordinateur personnel (PC) est telle que des instructions, qui commandent l'accès au choix et qui peuvent être converties au moyen d'un interpréteur d'ordinateur personnel en instructions de commande de l'appareil (F) de télécopie, peuvent être introduites dans cette unité de commande.

2. Système de traitement de données et de transmission de données suivant la revendication 1,
caractérisé en ce que
les groupes fonctionnels (SC, DR, FS/DS, AE) sont sous forme d'un analyseur, d'une imprimante, d'une mémoire de documents et de télécopie et/ou d'une unité de raccordement de systèmes de traitement de données et de transmission de données éloignés.

3. Système de traitement de données et de transmission de données suivant la revendication 1,
caractérisé en ce que
le programme de second plan enregistré dans la mémoire (AS) de travail se déroule indépendamment d'autres programmes dans l'ordinateur personnel (PC).

4. Système de traitement de données et de transmission de données suivant l'une des revendications 1 à 3,
caractérisé en ce que
chaque instruction de commande déclenche une réponse vers l'ordinateur personnel (PC), cette réponse étant mémorisée en fonction de l'instruction en tant que protocole.

5. Système de traitement de données et de transmission de données suivant l'une des revendications 1 à 4,
caractérisé en ce que
il s'effectue lors de la transmission d'informations et de documents une conversion du format de télécopie en format graphique et inversement.

6. Système de traitement de données et de transmission de données suivant l'une des revendications 1 à 5,
caractérisé en ce que
un écran de l'ordinateur personnel (PC) joue le rôle (contrôle) d'un dispositif d'affichage de l'appareil (F) de télécopie.
